# EUROPEAN PATENT APPLICATION

(11) **EP 3 511 093 A1**
(43) Date of publication of application: **17.07.2019**
(21) Application number: 18151828.3
(22) Date of filing: 16.01.2018
(51) Int. Cl.: B22F 3/105, B22F 3/24, B22F 5/00, B22F 5/04, B33Y 80/00, B33Y 40/00, B08B 7/00, B08B 9/00, B23H 9/00, B24B 31/00, B29C 64/35, B33Y 10/00, B33Y 30/00

(54) **METHOD OF REMOVING AN EXCESS MATERIAL FROM A CAVITY, ADDITIVE MANUFACTURING METHOD AND PART**

(71) Applicant: Siemens Aktiengesellschaft, 80333 München (DE)
(72) Inventor: Graichen, Andreas, 602 14 Norrköping (SE)

(57) **Abstract**

A method of removing an excess material (2) from a cavity (50) of an additively built part (100) is provided, the method comprises
- a) providing the part (100), with the cavity (50), wherein the cavity (50) retains a porous excess material (2) originating from a previous powder bed fusion build-up process of the part (100),
- b) charging the cavity (50) of the part (100) with a fluid, comprising a cracker medium (10), such that the cracker medium (10) is distributed in pores (3) of the excess material (2) in the cavity (50),
- c) depositing the cracker medium (10) in the pores (3),
- d) structurally cracking the excess material (2) by thermal and/or pressure treatment of the cracker medium (10) in the pores (3), and
- e) removing the cracked excess material (2) from the cavity (50). Further, an according manufacturing method and a part (100) manufactured by said method is provided.

## Description

The present invention relates to a method of removing an excess material from the cavity of an additively built part, a corresponding additive manufacturing method and an accordingly manufactured part.

Preferably, the part denotes a component applied in a turbo machine, e.g. in the flow path hardware of a gas turbine. The component is, thus, preferably made of a superalloy or nickel-based alloy, particularly a precipitation or dispersion hardened alloy.

Additive manufacturing techniques comprise e.g. powder bed (fusion) methods, such as selective laser melting (SLM) or electron beam melting (EBM).

A method of selective laser melting is described in EP 2 601 006 B1, for example.

Additive manufacturing methods have proven to be useful and advantageous in the fabrication of prototypes or complex and filigree components, such as lightweight design or cooling components comprising mazelike internal structures. Further additive manufacturing stands out for its short chain of process steps, as a manufacturing step can be carried out based on corresponding CAD, CAM and/or construction data.

Powder bed fusion methods are relatively well known methods for fabricating, prototyping or manufacturing parts or components from powder material, for instance. Conventional apparatuses or setups for such methods usually comprise a build platform on which the component is built layer-by-layer after the feeding of a portion of base material which may then be melted, e.g. by the energy of an electron or laser beam and subsequently solidified. The layer thickness is determined by a wiper that moves, e.g. automatically, over the powder bed and removes excess material. Typical layer thicknesses amount to 20 µm or 40 µm. During the manufacture, said laser beam scans over the surface and melts the powder on selected areas which may be predetermined by a CAD-file according to the predetermined geometry of the component or part.

When carrying out electron beam melting or similar powder bed fusion methods on metallic powders, the particles of the respective powder become electrically charged (negative charge), and repel each other due to electrostatic forces so that a cloud of metallic particles is generated, the so-called smoke effect. This cloud prevents high-quality deposition attempts because of shadowing and deflection of the electron beam on its way to the powder bed surface. Said cloud creates as well a high risk of electrical circuits in the build space and/or the electron gun.

As a means to prevent this hovering cloud during the EBM process, prior to that the electron beam is swept across the entire powder bed surface in an unfocused way, to lightly bake or sinter powder particles before the actual solidification operation/scanning starts.

If e.g. in the powder bed based manufacture of gas turbine parts, cavities for cooling channel shall be created, there is inherently a powder inclusion in the cavity, in case if EBM, said powder particles are further (partly) sintered and stick together such that a removal through a tiny opening, e.g. an inlet opening is almost impossible, if the bake material cannot directly mechanically be removed and accessed.

Thus, it is currently technically difficult, to remove the excess material from cavities in the EBM process. Consequently, the EBM technology is very limited, e.g. in view of the manufacture of gas turbine components. Particularly, said components can - by way of EBM - only be manufactured in a "non-cooling" design or in a very simple cooling design, wherein e.g. easy access of cavities or channels is provided. A sophisticated design of cooling channels is, however, not feasible. Thus, if one cannot remove said material manually, the EBM process is disqualified at all for the manufacture of the given parts.

Similar problems may occur, when applying selective laser melting at high temperatures, for example at temperatures of above 1000° C, for the manufacture of gas turbine components, as said pre-heating or operation temperatures also effect partial sintering of powder, at least in the vicinity of the melt pool.

It is, thus, an object of the present invention to provide means which solve the given problems, particularly the removal of at least partly sintered powder from difficult to access cavities in as-built gas turbine parts.

The mentioned object is achieved by the subject-matters of the independent claims. Advantageous embodiments are subject-matter of the dependent claims.

An aspect of the present invention relates to a method of removing an excess material from the cavity of an additively built part or component comprising providing said part with the cavity, wherein the cavity retains a porous excess material originating from a previous powder bed fusion build-up process of the part. The cavity, preferably, constitutes a fluid channel of the part which allows for cooling the part during its intended operation by a cooling fluid.

Said powder bed fusion process is preferably electron beam melting. Accordingly, said excess material is porous, as it is e.g. at least partly baked or sintered prior to the structural build-up process in order to avoid electric charging of particles of the respective powdery base material and the mentioned smoke effect.

The method further comprises charging, loading or flooding the cavity of the part with a fluid, such as a gas and/or liquid. Said fluid may be a breaking or cracking fluid. Said fluid comprises a cracker medium, such that - by way of the charging - said cracker medium is being distributed in pores of the excess material in the cavity.

The method further comprises depositing the cracker medium in the pores. This may be performed simultaneously with the charging step and effect that the cracker medium is not only arranged in the cavity but also in the pores provided by the excess material.

The method further comprises structurally cracking the excess material by thermal and/or pressure treatment of the cracker medium in the pores. Said cracking or breaking, preferably, comprises or means freeing internal surfaces of the cavity from said axis material and/or to smash the at least partly baked material into smaller particles, such as powder or granular particles which may be easily removed through a fluid opening of the component, for instance.

Thermal treatment may in this context mean that the cracker medium is heated or warmed to a certain temperature which allows for said cracking. Additionally or alternatively - for a similar purpose - a certain ambient pressure may be applied to the cracker medium.

The method further comprises removing the cracked excess material from the cavity, e.g. through at least one fluid opening of the part.

As an advantage, by the given means, almost all of the porous excess material, i.e. the at least partly baked or sintered excess material, may be removed from the cavity of the part through fairly tiny openings. Consequently, a route is provided which allows for applying the technology of electron beam melting as well as high temperature selective laser melting for the additive manufacture of gas turbine components which require - due to their application in the hot gas path - a sophisticated and filigree cooling channeling.

In an embodiment, said fluid and/or cracker medium may serve as a propellant for the removal of said excess material.

In an embodiment, the cavity constitutes a fluid channel, such as a cooling channel of the part. To this effect, the cavity may have a fairly small dimension, e.g. a diameter or extension in the millimeter to centimeter range.

In an embodiment, a majority of the pores of the porous excess material fluidly communicate. This may be due to the fact that the porous excess material, preferably, constitutes only partly sintered or baked powder. Said baked powder may differ from the non-sintered, as-deposited powder only in that the substantially spherical powder particles are connected to each other via sintering "throats" which reduce porosity of said material as compared to the powdery state. The network of pores preferably fluidly communicates over almost the whole cavity.

In an embodiment, the porous excess material is or constitutes baked or sintered powder comprising a porosity between 1 and 10%.

In an embodiment, after the structural cracking, content of the cavity - e.g. comprising the excess base material and the fluid and/or the cracker medium - is mechanically excited, such as excited by ultrasonication. These means help to further improve the removal of almost all of the remaining excess material in the cavity.

In an embodiment, the step of the structural cracking and the mechanical excitement are repeated alternatingly for multiple times, such as two or three or ten times, preferably until the aim of sufficient or complete powder removal is achieved.

In an embodiment the cavity is charged with a gaseous fluid or gas at an elevated temperature. Said elevated temperature may be any temperature, e.g. a temperature above the ambient temperature or above the temperature at which the part with the cavity is provided. Preferably, said elevated temperature effects to charge the cavity with a fluid in a gaseous state and/or to deposit the cracker medium in the pores.

In an embodiment, for the deposition of the cracker medium, the part (preferably along with a content of the cavity) is cooled from said elevated temperature to below a precipitation temperature at which the cracker medium precipitates, dews or condensates in the pores.

In an embodiment, the cracking or breaking of the excess material is carried out by expanding the cracker medium in the pores.

In an alternative embodiment, the cavity is charged with a liquid instead of a gas.

In an embodiment the cracker medium is deposited in the pores by flooding or seeping.

In an embodiment, the cracker medium is a medium which shows negative thermal expansion behaviour, such as water.

In embodiment, the fluid constitutes the cracker medium.

In an embodiment, the cracking of the excess material is carried out by cooling the cracker medium in the pores down to or below a maximum density temperature of the cracker medium, as is present in the case of cracker media with negative thermal expansion behaviour.

In an embodiment, the material of the part has ductile and/or non-brittle mechanical behaviour over the whole temperature range of the herein described method or method steps.

In an embodiment, the powder bed fusion buildup process of the part is electron beam melting.

In an embodiment, the powder bed fusion build-up process of the part is selective laser melting. Preferably, during said selective laser melting process, temperatures of 1000° C or more are applied. According to this embodiment, the inventive advantages of the presented method can be exploited.

A further aspect of the present invention relates to an apparatus being suitable and configures to carry out at least the steps of the charging the cavity with a fluid, the depositing the cracker medium and the structural cracking of the excess material, as described.

A further aspect of the present invention relates to a method of additive manufacturing a part via electron beam melting or (high temperature) selective laser melting comprising the method of removing an excess material from the cavity of the part as described, wherein the part is a fluid cooled or coolable gas turbine component, preferably a turbine component for fossil power generation.

A further aspect of the present invention relates to a part manufactured by the method of manufacturing, wherein the part is a gas turbine component made of a material with a high γ, and/or γ' phase content and/or one of the materials Inconel 625, Inconel 718, Inconel 738, Inconel 939, Haynes 282, Merl 72, Stal 15 and Alloy 247.

Advantages relating to the described method of removing, method of additive manufacturing and/or the described component or part may as well pertain to the apparatus as described, and vice versa.

Further features, expediencies and advantageous refinements become apparent from the following description of the exemplary embodiment in connection with the Figures.
- Figure 1: shows a schematic side or sectional view of a component 100 during its additive build-up.
- Figs 2-5: further indicate method steps according to the present invention.

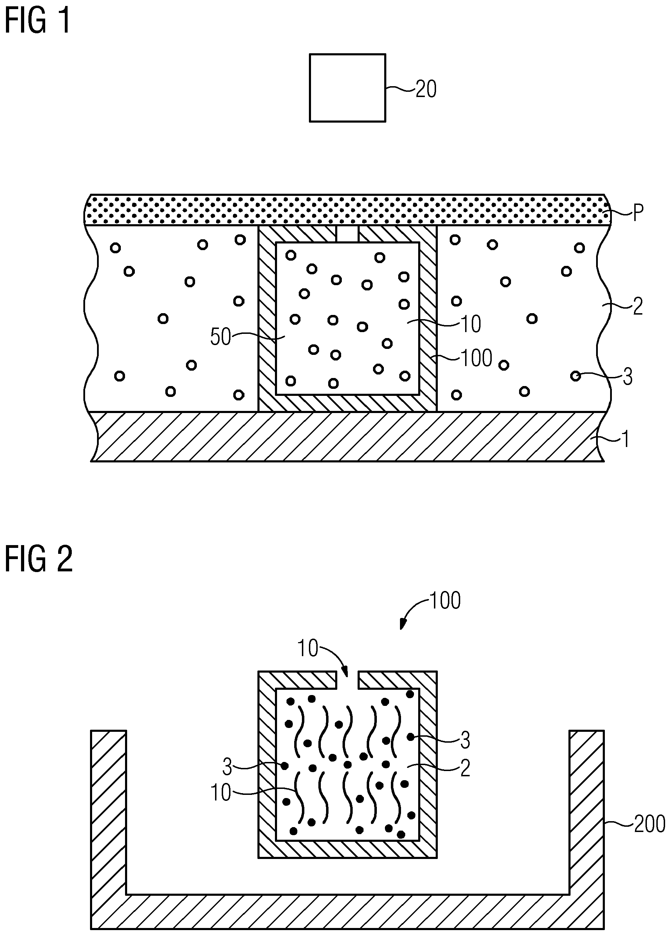

- Figure 2: shows a schematic side or sectional view of the asbuilt component with a cavity comprising an excess material.

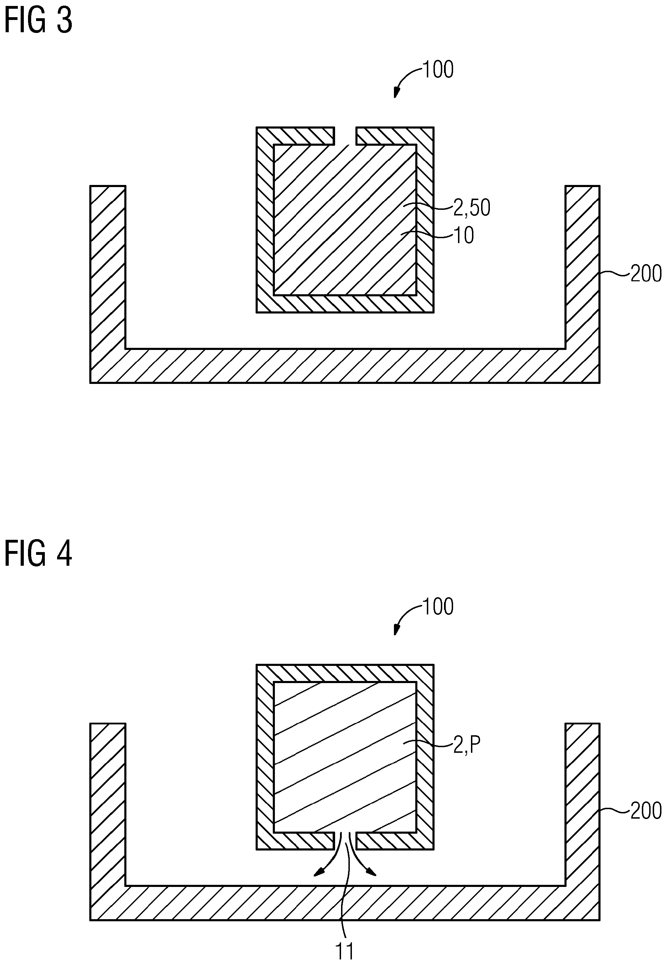

- Figure 3: shows the component of Figure 2 being charged with a cracker medium.
- Figure 4: shows the component of the previous Figures, wherein an excess material is being removed from the cavity.

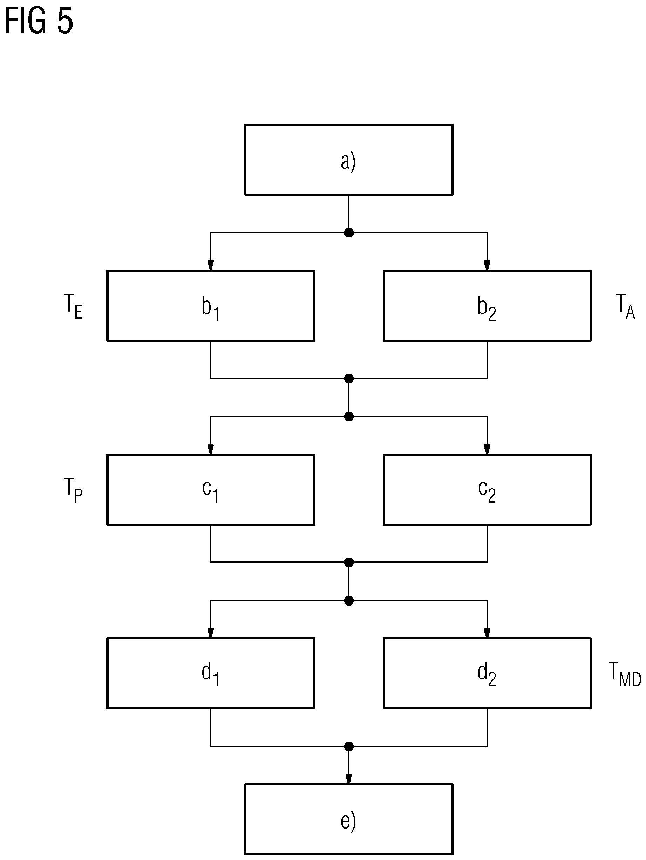

- Figure 5: indicates - by means of a schematic flow chart - method steps of the presented method.

Like elements, elements of the same kind and identically acting elements may be provided with the same reference numerals in the Figures.

Figure 1 shows a build platform 1. On said build platform 1, a component 100 is arranged, such as a gas turbine component, more preferably a fluid cooled or coolable gas turbine component applied in the hot gas path of a gas turbine, preferably a gas turbine for fossil power generation.

The part 100 comprises a cavity 50. Said cavity 50, preferably, constitutes a cooling channel or cooling cavity of the part 100 which is intended to be flown through by a cooling medium in an operation of the part 100. To this effect, the part 100 expediently comprises an opening 30 for an entry of said cooling fluid. Although also an according fluid outlet (opening) has then to be present, this is - for the sake of simplicity - not explicitly indicated in the Figures and may be located at a different sectional region of the part 100.

The part 100 is, preferably, additively built up by a powder bed fusion process, such as electron beam melting or selective laser melting. To this effect, the structure of the part 100 has preferably been selectively solidified with an energy beam, such as an electron beam or a laser (not explicitly indicated) from an irradiation unit 20. An excess material being arranged at regions aside from the part is indicated with reference numeral 2.

The component or part 100 is, preferably, shown in an as-built state, wherein every layer for the part 100 - which has e.g. been pre-defined via CAD and/or CAM means - is solidified and generated. Owing to the high temperatures involved in the additive manufacture of gas turbine components, the originally powdery base material 2 tends to be sintered or baked at regions close to the structure of the part, as e.g. in the cavity 50. This is particularly the case, as gas turbine components are usually made of superalloys and/or hardened alloys made of a material with a high, γ, or γ' phase content such as Inconel 625, Inconel 718, Inconel 738, Inconel 939, Haynes 282, Merl 72, Stal 15 and Alloy 247.

By the described means, the part 100 is expediently provided with the cavity 50 (cf. step a) in Figure 5 below).

In case of an EBM process, the whole powder bed is - prior to the additive buildup of the structure of the part 100 - irradiated with the electron beam, e.g. in a non-focused mode, such that the powder is sintered and the mentioned smoke effect is avoided. Thus, in this case, the cavity is almost completely filled with a porous (excess) material which can - without cracking or breaking said material - not be removed anymore from the cavity.

Pores of said excess material 2 are indicated with reference numeral 3. Said pores 3, preferably, fluidly communicate. In other words, the porosity of the material is configured such that the pores fluidly communicate. Said porosity may arise as a typical feature, when the whole powder bed is treated with temperatures of above than 1000° C and/or irradiated with the defocused electron beam (see above).

Said porosity of the excess material may amount to between 1 and 10 %.

The removal can also not sufficiently be carried out by simple mechanical means, as this would only lead to partial removal of the excess material 2. For the given turbine components to operate properly later on, the cavity 50 has, however, to be fully freed from said excess material, e.g. in order to provide for the required cooling functionality.

To solve this problem, a method of removing said excess material 2 from the cavity 50 is described in the following Figures:
The method comprises - a) - providing the part 100, with the cavity 50 as described, wherein the cavity 50 retains a porous excess material 2 originating from a previous powder bed fusion build-up process of the part 100. The method further comprises - b) - charging the cavity 50 of the part 100 with a fluid, comprising a cracker medium 10, such that the cracker medium 10 is distributed in pores 3 of the excess material 2 in the cavity 50 (cf. Figure 2). The method further comprises - c) - depositing the cracker medium 10 in the pores 3 (cf. Figure 3). The method further comprises - d) - structurally cracking the excess material 2 by thermal and/or pressure treatment of the cracker medium 10 in the pores 3 (see e.g. Figure 2). Finally, said method comprises - e) - removing the cracked excess material 2 from the cavity 50 (cf. also figure 5 below).

Figure 2 shows a situation, wherein the component or part 100 is charged with a gas, steam or vapor such as water vapor at an elevated temperature T_{E}, e.g. an ambient temperature being higher than the temperature the part has in its as-built or as-provided state (cf. Figure 2 and step b1) in Figure 5 below). Said elevated temperature T_{E} may e.g. be reached by any warming or heating means, even by radiative heating with aid of microwaves.

The fill of cavity 50 in Figure 2, preferably, indicates the presence of porous excess material 2.

Said charging is, preferably, carried out in a specific apparatus 200 being configured to charge the cavity 50 with said fluid, particularly the cracker medium 10, as described herein.

The hatching of the cavity 50 in Figure 3 may indicate the deposition of the cracker medium 10 in the pores 3 as well as the structural cracking of the excess material 2 by any expedient thermal and/or pressure treatment processes.

For the deposition of the cracker medium 10 - the part 100 may, then, be cooled from said elevated temperature T_{E} to below a precipitation temperature T_{P}, at which the cracker medium 10 precipitates in the pores 3 (cf. step c1) in Figure 5 below).

Next, the cracking of the excess material 2 is carried out, e.g. by expanding the cracker medium 10 in the pores 3 (cf. Figure 3 and step d1) in Figure 5 below). Additionally or alternatively, a pressure treatment, such as depression and/or compression, may be applied for the cracking.

Said deposition as well as said cracking is, preferably, also carried out in the apparatus 200 which is configured to deposit the cracker medium 10 and to crack and/or to loosen the excess materiel 2 in the way described herein, such that it may be removed from the cavity 50.

In this way, the cracker medium may effect like a propellant or propelling agent.

In an alternative embodiment, the cavity 50 is charged with a liquid (cf. step b2) in Figure 5), wherein the cracker medium 10 is deposited in the pores 3 by flooding (cf. step c2) in Figure 5), and wherein the cracker medium 10 is a medium with shows negative thermal expansion behaviour, such as water or any further medium, such as salts, solvents or other novel media suitable for the described cracking purposes.

As in this case, the fluid may constitute the cracker medium 10.

The cracking of the excess material 2 may, thus, be carried out by cooling the cracker medium 10 in the pores 3 down to or below a maximum density temperature T_{MD} of the cracker medium 10 (cf. step d2) in Figure 5). Additionally or alternatively, a pressure treatment, such as depression and/or compression, may be applied for the cracking.

After the structural cracking, a content of the cavity 50 may be mechanically excited, such as excited by ultrasonication in order to enhance the result of cracking or loosening of the excess material 2. The step of the structural cracking and the mechanical excitement may be repeated alternatingly multiple times in order to further improve the result.

Figure 4 indicates a method step, wherein the cracked excess material 2 is removed again from the cavity 50. This is performed particularly through the opening 11 and e.g. in that the part 100 is flipped upside down and the cracked and loosened base material may be blown out of the cavity 50 (cf. also step e) and curved arrows in Figure 5).

The flow chart of Figure 5 shows - by the two branches - alternative ways of the described charging (cf. b); b1), b2)), depositing (cf. c); c1), c2)) and cracking (cf. d); d1), d2)).

During all the herein presented process steps, a material of the part 100 has, preferably, inherently sufficient ductile behaviour over the whole temperature range such that material structure does not suffer from the presented method of removing the excess material. Said method is preferably chosen or tailored not to cause an embrittlement of the material of the part 100, nor any other deterioration.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Method of removing an excess material (2) from a cavity (50) of an additively built part (100) comprising the steps of:
- a) providing the part (100), with the cavity (50), wherein the cavity (50) retains a porous excess material (2) originating from a previous powder bed fusion build-up process of the part (100),
- b) charging the cavity (50) of the part (100) with a fluid, comprising a cracker medium (10), such that the cracker medium (10) is distributed in pores (3) of the excess material (2) in the cavity (50),
- c) depositing the cracker medium (10) in the pores (3),
- d) structurally cracking the excess material (2) by thermal and/or pressure treatment of the cracker medium (10) in the pores (3), and
- e) removing the cracked excess material (2) from the cavity (50) .

2. Method according to claim 1, wherein the cavity (50) constitutes a fluid channel, such as a cooling channel of the part.

3. Method according to claim 1 or 2, wherein a majority of the pores (3) fluidly communicate.

4. Method according to one of the previous claims, wherein porous excess material (2) is baked or sintered powder comprising a porosity between 1 and 10 %.

5. Method according to one of the previous claims, wherein after the structural cracking, a content of the cavity (50) is mechanically excited, such as excited by ultrasonication.

6. Method according to claim 5, wherein the step of the structural cracking and the mechanical excitement are repeated alternatingly multiple times.

7. Method according to one of the previous claims, wherein the cavity (50) is charged with a gaseous fluid at an elevated temperature, and wherein - for the deposition of the cracker medium (10) - the part (100) is cooled from said elevated temperature (T_{E}) to below a precipitation temperature (T_{P}), at which the cracker medium (10) precipitates in the pores (3).

8. Method according to claim 7, wherein the cracking of the excess material (2) is carried out by expanding the cracker medium (10) in the pores (3).

9. Method according to one of claims 1 to 6, wherein the cavity (50) is charged with a liquid, wherein the cracker medium (10) is deposited in the pores (3) by flooding, and wherein the cracker medium (10) is a medium with shows negative thermal expansion behaviour, such as water.

10. Method according to claim 9, wherein the fluid constitutes the cracker medium (10) and the cracking of the excess material (2) is carried out by cooling the cracker medium (10) in the pores (3) down to or below a maximum density temperature (T_{MD}) of the cracker medium (10) .

11. Method according to one of the previous claims, wherein a material of the part (100) has ductile behaviour over the whole temperature range of the described method.

12. Method according to one of the previous claims, wherein the powder bed fusion build-up process of the part (100) is electron beam melting or high temperature selective laser melting.

13. Apparatus being suitable to carry out at least the steps b), c), d) of the method of at least one of the previous claims.

14. Method of additive manufacturing a part via electron beam melting or high temperature selective laser melting comprising the method of removing an excess material from a cavity of the part according to one of claims 1 to 12, wherein the part is a fluid cooled gas turbine component.

15. Part (100) manufactured by the method according to claim 14, wherein the part (100) is gas turbine component made of a material with a high γ'-phase content.
